# EUROPEAN PATENT APPLICATION

(11) **EP 3 690 176 A1**
(43) Date of publication of application: **05.08.2020**
(21) Application number: 18862077.7
(22) Date of filing: 12.06.2018
(51) Int. Cl.: E06B 9/264, E06B 5/00, E06B 9/266, H02S 20/22

(54) **SOLAR BATTERY WINDOW BLIND**

(30) Priority: 29.09.2017 JP 2017191086
(71) Applicant: LIXIL Corporation, Koto-ku Tokyo 136-8535 (JP)
(72) Inventor: ISHII Hisashi, Tokyo 136-8535 (JP)
(74) Representative: karo IP
(86) International application number: PCT/JP2018/022347
(87) International publication number: WO 2019/064717

(57) **Abstract**

A solar cell window shade 10 is disposed in an opening in a building. The solar cell window shade 10 includes: multiple slats 12 arranged longitudinally; a solar cell 14 provided on each slat 12; a pin-shaped electrode 26 that protrudes from each of the both ends in a length direction of each slat 12 toward a lateral direction and that is electrically conductive with the solar cell 14; a guide rail 32 that is provided in a mullion 1 on the opening and that slidably holds the pin-shaped electrode 26; a lead 30 that is fixedly disposed within a wiring space 36 formed in the guide rail 32 and that electrically connects with the solar cell 14 of a slat 12; and an electrode formed on the lead 30 such as to be electrically in contact with the pin-shaped electrode 26.

## Description

### [TECHNICAL FIELD]

The present invention relates to a solar cell window shade, which is a window shade provided with solar cells.

### [BACKGROUND ART]

There has been conventionally known a solar cell window shade in which solar cells are arranged on each of multiple slats in order to improve energy efficiency (see Patent Literature 1, for example).

### [PRIOR ART REFERENCE]

### [PATENT LITERTURE]

[Patent Literature 1] Japanese Patent Application Laid-Open Publication No. 2000-340824

### [SUMMARY OF INVENTION]

### [TECHNICAL PROBLEM]

In such a solar cell window shade, leads are generally provided to derive output from the solar cells arranged on each slat. However, there is a problem of bulky leads when the slats are pulled up and stacked.

The present invention has been made in view of such a problem, and a purpose thereof is to provide a solar cell window shade in which wiring can be suitably provided for solar cells arranged on each slat.

### [SOLUTION TO PROBLEM]

To solve the problem above, a solar cell window shade of one aspect of the present invention is disposed in an opening in a building, and the solar cell window shade includes: multiple slats arranged longitudinally; a solar cell provided on each slat; a pin-shaped electrode that protrudes from each of the both ends in a length direction of each slat toward a lateral direction and that is electrically conductive with the solar cell; a guide rail that is provided in a jamb on the opening and that slidably holds the pin-shaped electrode; a wire that is fixedly disposed within a wiring space formed in the guide rail and that electrically connects with the solar cell of a slat; and an electrode formed on the wire such as to be electrically in contact with the pin-shaped electrode.

### [ADVANTAGEOUS EFFECTS OF INVENTION]

The present invention provides a solar cell window shade in which wiring can be suitably provided for solar cells arranged on each slat.

### [BRIEF DESCRIPTION OF DRAWINGS]

Embodiments will now be described, by way of example only, with reference to the accompanying drawings which are meant to be exemplary, not limiting, and wherein like elements are numbered alike in several Figures, in which:
FIG. 1 is a schematic front view that shows a state where solar cell window shades in an embodiment of the present invention are mounted on openings in a building;
FIG. 2 is a schematic sectional view taken along line A-A in FIG. 1;
FIG. 3 is a schematic perspective view used to describe, in more detail, the configuration of the solar cell window shade in the embodiment of the present invention;
FIG. 4 is a schematic sectional view of essential parts of the solar cell window shade in the embodiment of the present invention;
FIG. 5 is a diagram used to describe a state of connection between pin-shaped electrodes of each slat and leads in the solar cell window shade in the embodiment of the present invention;
FIG. 6 is another diagram used to describe a state of connection between the pin-shaped electrodes of each slat and leads in the solar cell window shade in the embodiment of the present invention;
FIG. 7 is a diagram used to describe a state of connection between the pin-shaped electrodes of each slat and leads in the solar cell window shade in the embodiment of the present invention, when each slat is moved upward by one slat from the state shown in FIG. 5;
FIG. 8 is a diagram used to describe a state of connection between the pin-shaped electrodes of each slat and leads in the solar cell window shade in the embodiment of the present invention, when each slat is moved upward by one slat from the state shown in FIG. 6;
FIG. 9 is a schematic sectional view of essential parts used to describe a modification of the solar cell window shade in the embodiment of the present invention;
FIG. 10 is a diagram used to describe a solar cell window shade in another embodiment of the present invention;
FIG. 11 is a diagram used to describe a state of connection between the pin-shaped electrodes of each slat and leads in the solar cell window shade in the another embodiment of the present invention, when each slat is moved upward by one slat from the state shown in FIG. 10;
FIG. 12 is a diagram used to describe a solar cell window shade in yet another embodiment of the present invention; and
FIG. 13 is a diagram used to describe a state of connection between the pin-shaped electrodes of each slat and leads in the solar cell window shade in the yet another embodiment of the present invention, when each slat is moved upward by one slat from the state shown in FIG. 12.

### [DESCRIPTION OF EMBODIMENTS]

In the following, the present invention will be described based on preferred embodiments with reference to the drawings. Like reference characters denote like or corresponding constituting elements and members in each drawing, and repetitive description will be omitted as appropriate. Also, the dimensions of a member may be appropriately enlarged or reduced in each drawing in order to facilitate understanding. Further, in each drawing, part of a member less important in describing embodiments may be omitted.

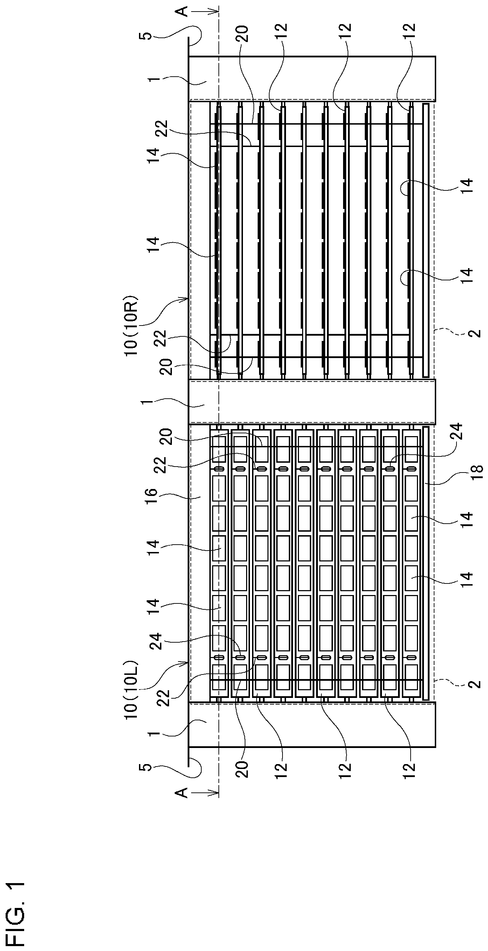

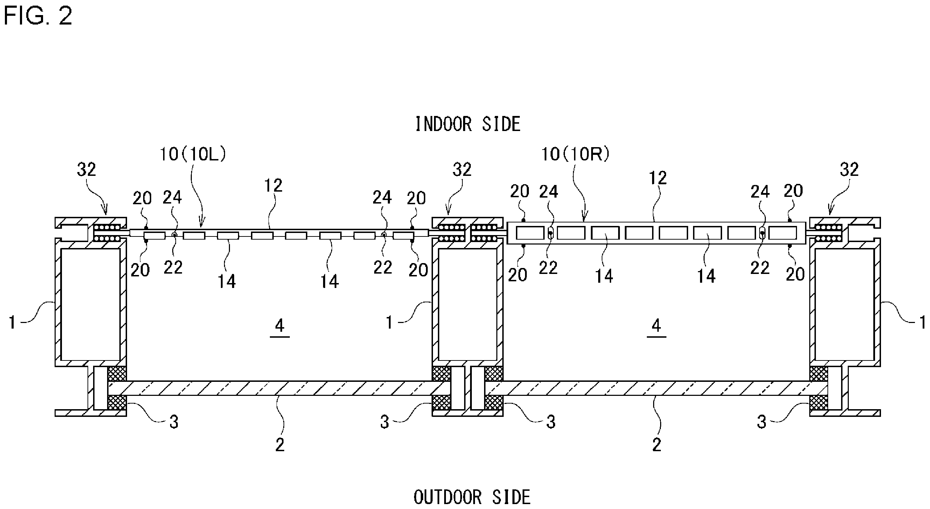

FIG. 1 is a schematic front view that shows a state where solar cell window shades 10 in an embodiment of the present invention are mounted on openings in a building. FIG. 1 shows the openings in the building viewed from the outdoor side. FIG. 2 is a schematic sectional view taken along line A-A in FIG. 1. As shown in FIGS. 1 and 2, each solar cell window shade 10 is disposed between two mullions 1 extending vertically. FIGS. 1 and 2 show two solar cell window shades 10. A solar cell window shade 10L on the left side in FIGS. 1 and 2 shows a state where the slats thereof are closed, and a solar cell window shade 10R on the right side shows a state where the slats thereof are opened.

In the building described in the present embodiment, curtain wall construction is employed, in which a glass panel 2 is mounted on the outdoor side of the mullions 1 using structural sealants 3, for example. Instead of the structural sealants 3, other supporting methods, such as gaskets and seal materials, may also be used. For example, in a conventional curtain wall, a grass panel is fitted into a frame member, such as mullions and transoms, and is fixed by means of a sealing material or the like. Instead of such a conventional curtain wall, every supporting method, including construction for a frameless structure, may be used. Each solar cell window shade 10 is disposed on the indoor side of the mullions 1. If the glass panel 2 is viewed as an outer skin and the solar cell window shade 10 is viewed as an inner skin, a condition closer to a curtain wall with a double skin structure, including an air layer 4 formed between the glass panel 2 and the solar cell window shade 10, can be made. The air layer 4 formed between the glass panel 2 and the solar cell window shade 10 functions as a heat insulating layer in wintertime, thereby improving the heating efficiency on the indoor side. Meanwhile, in summertime, proportion of solar heat transferred to the indoor side is reduced by the effect of the window shade and can be further reduced by the photoelectric effect of PV cells attached to the slats of the window shade.

The solar cell window shade 10 of the present embodiment is configured by longitudinally arranging multiple (ten in this example) slats 12, which each are laterally long, to form a window shade shape. Each slat 12 may be formed in a substantially rectangle shape that is laterally long, for example. On each slat, multiple solar cells 14 are arranged.

The solar cell window shade 10 further includes a headbox 16, a bottom rail 18, ladder cords 20, and lifting and lowering cords 22.

The headbox 16 is provided above the multiple slats 12 and constitutes the top part of the solar cell window shade 10. As shown in FIG. 1, the headbox 16 is fixed to a window shade mounting surface 5 of the building. Within the headbox 16, an angle adjustment mechanism (not illustrated) and a lifting and lowering mechanism (not illustrated) for the slats 12 are provided.

The bottom rail 18 is provided below the multiple slats 12 and constitutes the bottom part of the solar cell window shade 10.

The ladder cords 20 are cord members for adjusting the angle of the slats 12 in the solar cell window shade 10. The ladder cords 20 are respectively connected to the both sides in a width direction of each slat 12. The upper end of each ladder cord 20 is connected to the angle adjustment mechanism (not illustrated) within the headbox 16.

The lifting and lowering cords 22 are cord members for controlling the lifting and lowering of the slats 12. Each lifting and lowering cord 22 is inserted through a through hole 24 drilled in each slat 12. The lifting and lowering cords 22 are used to pull up the slats 12 serially from the slat 12 at the top, thereby stacking and storing the slats 12 within the headbox 16, and to lower the slats 12 out of the headbox 16, serially from the slat 12 at the bottom, thereby spacing the slats 12 out vertically downward.

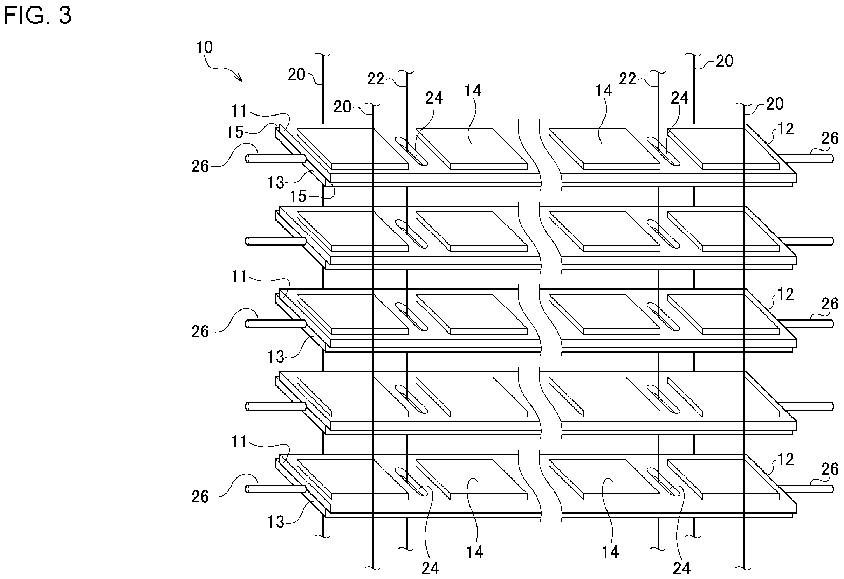

FIG. 3 is a schematic perspective view used to describe the configuration of the solar cell window shade 10 in more detail. As described previously, the multiple slats 12 are longitudinally arranged. On one surface of each slat 12, multiple solar cells 14 are arranged along a length direction of the slat 12. The through holes 24 are drilled in each slat, and the lifting and lowering cords 22 are respectively inserted through the through holes 24. To the both ends in a width direction of each slat, the ladder cords 20 are respectively connected.

The multiple solar cells 14 arranged on each slat 12 are connected in series to each other. The solar cells are configured to use photovoltaic effect and convert optical energy into electricity.

As shown in FIG. 3, in the solar cell window shade 10 of the present embodiment, each slat 12 is formed by laminating two plate members 11 and 13. The plate members 11 and 13 may be transparent plate-like bodies formed of resin, such as polycarbonate, or glass, for example. Alternatively, each slat 12 may be integrally formed of resin or glass. In the present specification, "transparent" means being transparent for visible light, i.e. being capable of transmitting visible light.

In the present embodiment, the two plate members 11 and 13 are laminated such as to be slightly displaced from each other in a width direction. This forms a step part 15 at each of the both ends in a width direction of each slat 12, as shown in FIG. 3. Alternatively, when each slat 12 is integrally formed, the step parts 15 may be made by forming the slat 12 such that edge parts thereof are not partially provided along a long side direction, or by forming the slat 12 and then processing the slat 12 by cutting edge parts thereof along a long side direction. When the slats 12 are closed, a step part 15 engages with another step part 15 of a neighboring slat 12, so that a space is less likely to occur between the slats 12. This can improve the airtightness of the air layer 4 (see FIG. 2) between the glass panel 2 and the solar cell window shade 10, thereby improving the heating efficiency on the indoor side.

Each slat 12 is provided with pin-shaped electrodes 26 that respectively protrude from the both ends in a length direction of the slat 12 toward the respective lateral directions. Each pin-shaped electrode 26 is an elongate rod-like body made of a conductive material. In the present embodiment, the pin-shaped electrodes 26 of each slat 12 have the same length. Each pin-shaped electrode 26 is provided between and held by the two plate members 11 and 13. One end of a pin-shaped electrode 26 positioned between the two plate members 11 and 13 is connected to an electrode of a solar cell 14 closest to the pin-shaped electrode 26. The other end of the pin-shaped electrode 26 is connected to an electrode of a wire, which electrically connects the solar cells 14 of the slat 12, as will be described later. On each slat 12, the multiple solar cells 14 are connected in series to each other.

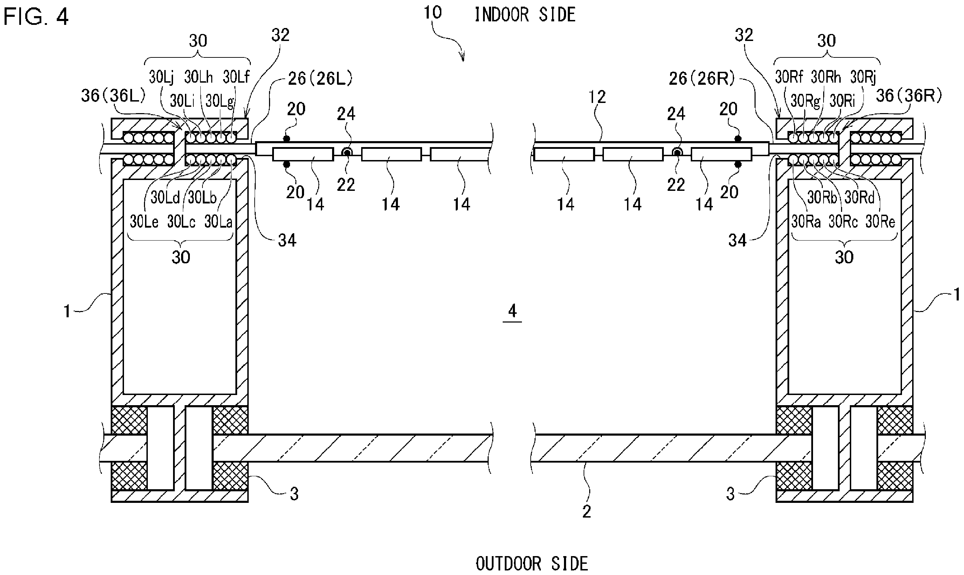

FIG. 4 is a schematic sectional view of essential parts of the solar cell window shade 10 in the present embodiment. As shown in FIG. 4, on the indoor side of each mullion 1, a guide rail 32 is provided to guide the slats 12 for lifting and lowering along a length direction of the mullion 1. In the embodiment shown in FIG. 4, a guide rail 32 and a mullion 1 are integrally formed of a metal material, such as stainless steel and an aluminum alloy. Alternatively, a guide rail 32 and a mullion 1 may be formed separately, and the guide rail 32 may be attached to the mullion 1 later by means of bolts or the like. In this case, the solar cell window shade can be employed in an existing building. When a guide rail 32 and a mullion 1 are formed separately, the guide rail 32 may be formed of the same metal material as the mullion 1, or may be formed of resin.

The guide rail 32 includes a vertically-long opening 34 formed on a side surface on the slat side, and a wiring space 36 formed such as to communicate with the vertically-long opening 34. Each pin-shaped electrode 26 protruding from an end part of a slat 12 is disposed within the wiring space 36 via the vertically-long opening 34. The pin-shaped electrode 26 is slidably held within the wiring space 36. In this way, the pin-shaped electrodes 26 protruding from the both ends of the slats 12 are slidably held by the guide rails 32 provided in the mullions 1, so that the slats 12 can be lifted and lowered along the guide rails 32. Since the pin-shaped electrodes 26 are held by the guide rails 32, swing of the slats 12 can be prevented. Accordingly, the airtightness of the air layer 4 (see FIG. 2) between the glass panel 2 and the solar cell window shade 10 can be further improved, so that the heating efficiency on the indoor side can also be further improved.

As described previously, the guide rails 32 are formed of a metal material, such as stainless steel. Accordingly, in order to insulate each guide rail 32 from the pin-shaped electrodes 26, insulation coating is applied on the inner surfaces of the vertically-long opening 34 and the wiring space 36.

The pin-shaped electrode 26 protruding from the left end of a slat 12 (hereinafter, referred to as a left pin-shaped electrode 26L) is inserted into a wiring space 36 (hereinafter, referred to as a left wiring space 36L), and, within the left wiring space 36L, multiple (ten in this example) leads 30 (a first left lead 30La through a tenth left lead 30Lj) are fixedly arranged. As shown in FIG. 4, the ten leads 30 are arranged such that a left pin-shaped electrode 26L is located between half of the leads 30 and the other half thereof. In the state where the left pin-shaped electrode 26L is located in between, each of the leads 30 is in contact with the left pin-shaped electrode 26L. The first left lead 30La through the fifth left lead 30Le are fixed to the inner wall of the left wiring space 36L on the outdoor side, at positions serially from a position closer to the slats 12. Accordingly, the first left lead 30La is disposed at a position closest to the slats 12, and the fifth left lead 30Le is disposed at a position farthest from the slats 12. Meanwhile, the sixth left lead 30Lf through the tenth left lead 30Lj are fixed to the inner wall of the left wiring space 36L on the indoor side, at positions serially from a position closer to the slats 12. Accordingly, the sixth left lead 30Lf is disposed at a position closest to the slats 12, and the tenth left lead 30Lj is disposed at a position farthest from the slats 12.

The pin-shaped electrode 26 protruding from the right end of a slat 12 (hereinafter, referred to as a right pin-shaped electrode 26R) is inserted into a wiring space 36 (hereinafter, referred to as a right wiring space 36R), and, within the right wiring space 36R, multiple (ten in this example) leads 30 (a first right lead 30Ra through a tenth right lead 30Rj) are fixedly arranged. As shown in FIG. 4, the ten leads 30 are arranged such that a right pin-shaped electrode 26R is located between half of the leads 30 and the other half thereof. In the state where the right pin-shaped electrode 26R is located in between, each of the leads 30 is in contact with the right pin-shaped electrode 26R. The first right lead 30Ra through the fifth right lead 30Re are fixed to the inner wall of the right wiring space 36R on the outdoor side, at positions serially from a position closer to the slats 12. Accordingly, the first right lead 30Ra is disposed at a position closest to the slats 12, and the fifth right lead 30Re is disposed at a position farthest from the slats 12. Meanwhile, the sixth right lead 30Rf through the tenth right lead 30Rj are fixed to the inner wall of the right wiring space 36R on the indoor side, at positions serially from a position closer to the slats 12. Accordingly, the sixth right lead 30Rf is disposed at a position closest to the slats 12, and the tenth right lead 30Rj is disposed at a position farthest from the slats 12.

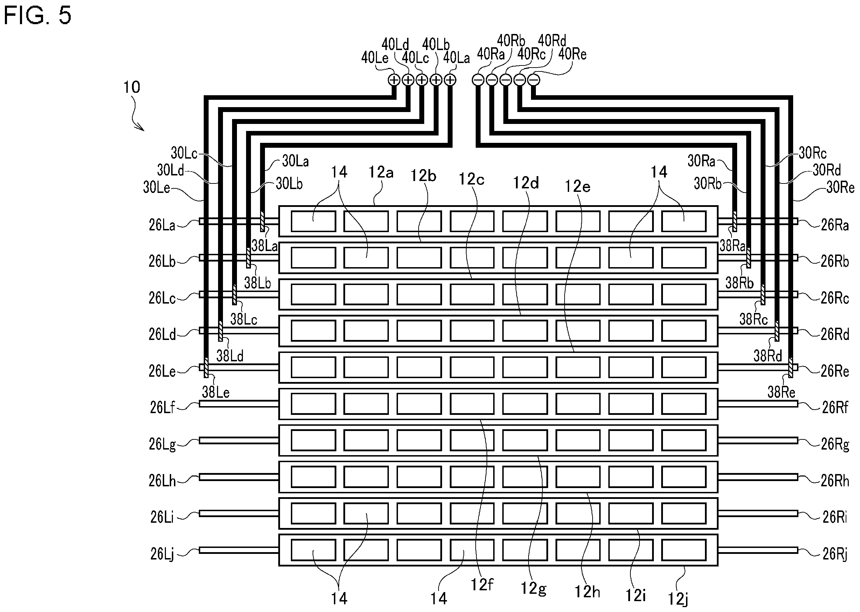

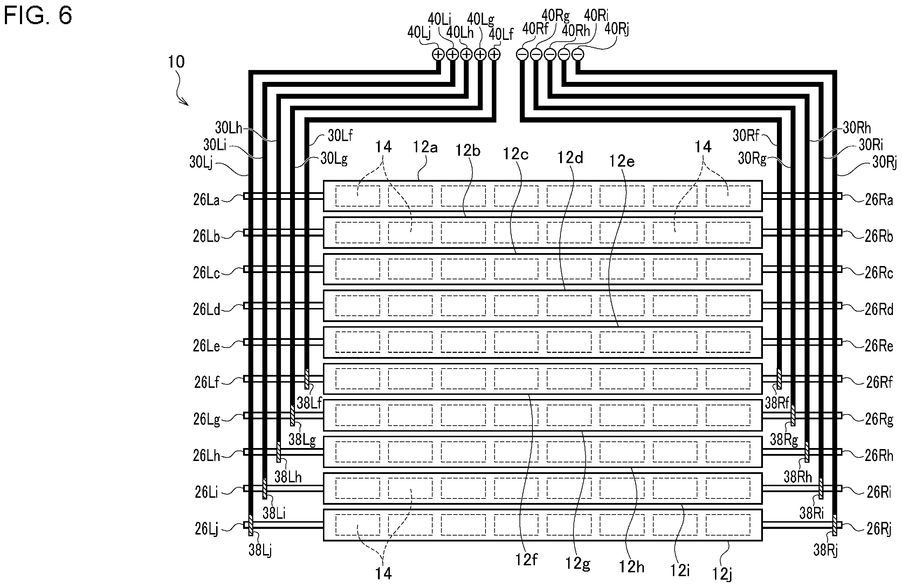

FIGS. 5 and 6 are diagrams used to describe a state of connection between the pin-shaped electrodes of each slat and leads. FIGS. 5 and 6 show a fully-closed state in which all the ten slats (a first slat 12a through a tenth slat 12j) are lowered. FIG. 5 is a diagram of the solar cell window shade 10 viewed from the outdoor side, and FIG. 6 is a diagram of the solar cell window shade 10 viewed from the indoor side.

From the left end of each slat, a left pin-shaped electrode 26L (among a first left pin-shaped electrode 26La through a tenth left pin-shaped electrode 26Lj) protrudes. Also, from the right end of each slat, a right pin-shaped electrode 26R (among a first right pin-shaped electrode 26Ra through a tenth right pin-shaped electrode 26Rj) protrudes.

As shown in FIG. 5, on the outdoor side of the left wiring space 36L, the first left lead 30La through the fifth left lead 30Le are vertically arranged at positions serially from a position closer to the slats. Also, on the outdoor side of the right wiring space 36R, the first right lead 30Ra through the fifth right lead 30Re are vertically arranged at positions serially from a position closer to the slats. Meanwhile, as shown in FIG. 6, on the indoor side of the left wiring space 36L, the sixth left lead 30Lf through the tenth left lead 30Lj are vertically arranged at positions serially from a position closer to the slats. Also, on the indoor side of the right wiring space 36R, the sixth right lead 30Rf through the tenth right lead 30Rj are vertically arranged at positions serially from a position closer to the slats. As shown in FIGS. 5 and 6, an extending direction of each lead and an extending direction of a pin-shaped electrode of each slat intersect perpendicularly.

In each lead, a conductor is covered with an insulator, and a part of the insulator coating of each lead is peeled off to expose the conductor, forming an electrode. The height position at which the electrode is formed is different for each lead.

For example, as the first left lead 30La corresponds to the first left pin-shaped electrode 26La, and the second left lead 30Lb corresponds to the second left pin-shaped electrode 26Lb, each lead corresponds to one pin-shaped electrode. The electrode of each lead is formed at a position where the lead and the corresponding pin-shaped electrode intersect. More specifically, at the intersections of the first left lead 30La through the tenth left lead 30Lj and the first left pin-shaped electrode 26La through the tenth left lead 30Lj, a first left electrode 38La through a tenth left electrode 38Lj are respectively formed. Also, at the intersections of the first right lead 30Ra through the tenth right lead 30Rj and the first right pin-shaped electrode 26Ra through the tenth right lead 30Rj, a first right electrode 38Ra through a tenth right electrode 38Rj are respectively formed. Each pin-shaped electrode is electrically connected with the electrode of the corresponding lead.

The first left lead 30La through the tenth left lead 30Lj are externally connected to a first positive terminal 40La through a tenth positive terminal 40Lj, respectively. Also, the first right lead 30Ra through the tenth right lead 30Rj are externally connected to a first negative terminal 40Ra through a tenth negative terminal 40Rj, respectively.

As shown in FIG. 5, when all the slats are lowered, the first left pin-shaped electrode 26La of the first slat 12a is in contact with the first left electrode 38La of the first left lead 30La, and the first right pin-shaped electrode 26Ra is in contact with the first right electrode 38Ra of the first right lead 30Ra. Accordingly, electricity generated by the solar cells 14 arranged on the first slat 12a is extracted through the first left lead 30La and the first right lead 30Ra via the first positive terminal 40La and the first negative terminal 40Ra.

The same applies to the second slat 12b through the tenth slat 12j, and, for example, the tenth left pin-shaped electrode 26Lj of the tenth slat 12j is in contact with the tenth left electrode 38Lj of the tenth left lead 30Lj, and the tenth right pin-shaped electrode 26Rj is in contact with the tenth right electrode 38Rj of the tenth right lead 30Rj, as shown in FIG. 6. Accordingly, electricity generated by the solar cells 14 arranged on the tenth slat 12j is extracted through the tenth left lead 30Lj and the tenth right lead 30Rj via the tenth positive terminal 40Lj and the tenth negative terminal 40Rj.

In summary, when all the slats are lowered, the nth left pin-shaped electrode of the nth slat is in contact with the nth left electrode of the nth left lead, and the nth right pin-shaped electrode is in contact with the nth right electrode of the nth right lead (n is an integer from 1 to 10). Accordingly, electricity generated by the solar cells 14 arranged on the nth slat is extracted through the nth left lead and the nth right lead via the nth positive terminal and the nth negative terminal.

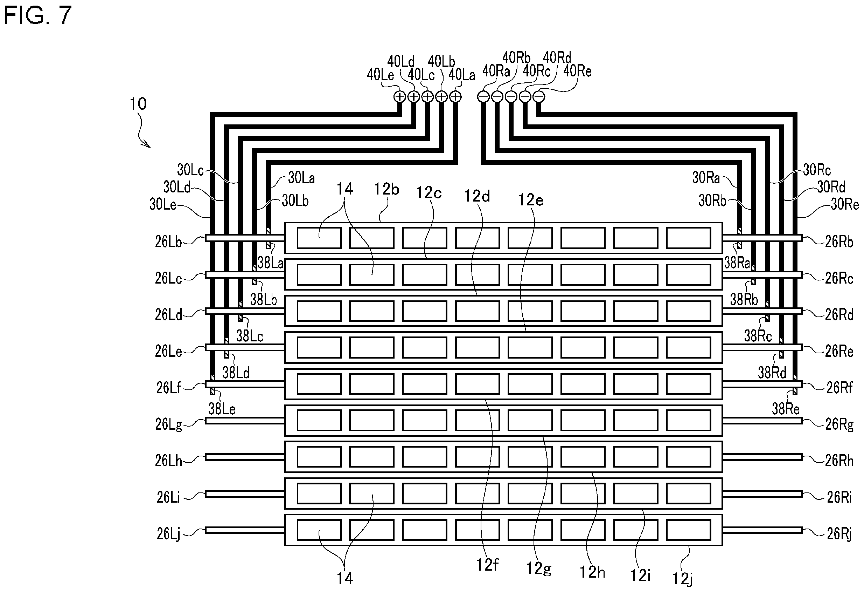

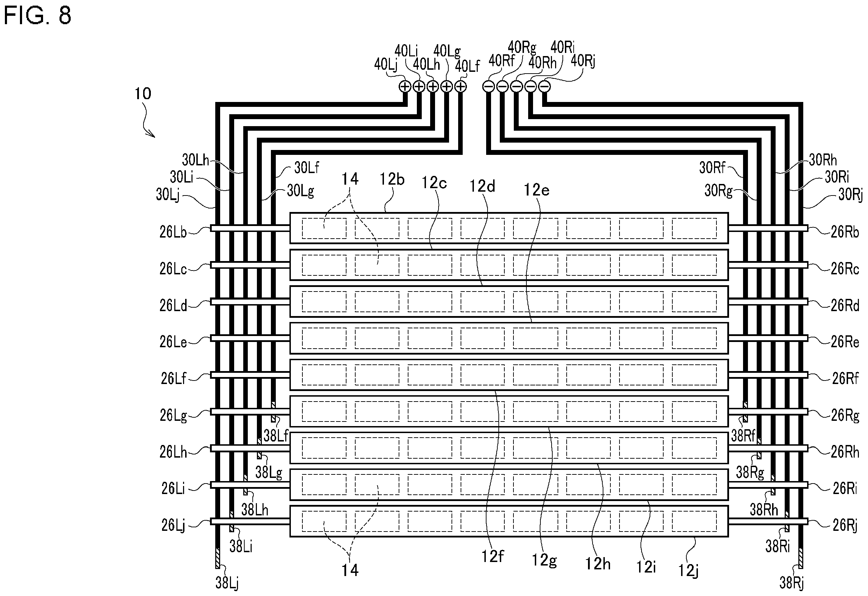

FIGS. 7 and 8 are diagrams used to describe states of connection between the pin-shaped electrodes of each slat and leads, when the first slat 12a is stored within the headbox 16 and each slat is moved upward by one slat from the states shown in FIGS. 5 and 6. FIG. 7 is a diagram of the solar cell window shade 10 viewed from the outdoor side, and FIG. 8 is a diagram of the solar cell window shade 10 viewed from the indoor side.

As shown in FIG. 7, when each slat is moved upward by one slat, the second left pin-shaped electrode 26Lb of the second slat 12b is in contact with the first left electrode 38La of the first left lead 30La, and the second right pin-shaped electrode 26Rb is in contact with the first right electrode 38Ra of the first right lead 30Ra. Accordingly, electricity generated by the solar cells 14 arranged on the second slat 12b is extracted through the first left lead 30La and the first right lead 30Ra via the first positive terminal 40La and the first negative terminal 40Ra.

The same applies to the third slat 12c through the tenth slat 12j, and, for example, the tenth left pin-shaped electrode 26Lj of the tenth slat 12j is in contact with the ninth left electrode 38Li of the ninth left lead 30Li, and the tenth right pin-shaped electrode 26Rj is in contact with the ninth right electrode 38Ri of the ninth right lead 30Ri, as shown in FIG. 8. Accordingly, electricity generated by the solar cells 14 arranged on the tenth slat 12j is extracted through the ninth left lead 30Li and the ninth right lead 30Ri via the ninth positive terminal 40Li and the ninth negative terminal 40Ri.

In summary, when the first slat 12a is stored within the headbox 16 and each slat is moved upward by one slat, the nth left pin-shaped electrode of the nth slat is in contact with the n-1th left electrode of the n-1th left lead, and the nth right pin-shaped electrode is in contact with the n-1th right electrode of the n-1th right lead (n is an integer from 2 to 10). Accordingly, electricity generated by the solar cells 14 arranged on the nth slat is extracted through the n-1th left lead and the n-1th right lead via the n-1th positive terminal and the n-1th negative terminal.

Thus, with the solar cell window shade 10 of the present embodiment, even when the first slat 12a is stored within the headbox 16 and each slat is moved upward by one slat, the output of the solar cells 14 arranged on the remaining second slat 12b through the tenth slat 12j can be suitably collected.

With reference to FIGS. 7 and 8, the case where the first slat 12a is stored within the headbox 16 has been described. However, with the solar cell window shade 10 of the present embodiment, even when multiple slats are stored within the headbox 16, electricity generated by the solar cells 14 arranged on the remaining slats, which are not stored, can be extracted. More specifically, when m slats are stored within the headbox 16 and each slat is moved upward by m slats, the nth left pin-shaped electrode of the nth slat is in contact with the n-mth left electrode of the n-mth left lead, and the nth right pin-shaped electrode is in contact with the n-mth right electrode of the n-mth right lead. Accordingly, electricity generated by the solar cells 14 arranged on the nth slat is extracted through the n-mth left lead and the n-mth right lead via the n-mth positive terminal and the n-mth negative terminal.

In the solar cell window shade 10 configured as described above, the multiple leads 30 are fixedly arranged within the wiring spaces 36 provided in the guide rails 32. Accordingly, even when the slats 12 are lifted or lowered, the leads 30 are not moved. This prevents the situation in which the leads 30 bulk when the slats 12 are pulled up and stacked.

Also, since the leads 30 are provided in the wiring spaces 36 within the guide rails 32 separated from the slats 12, interference between the slats 12 and the leads 30 can be prevented. This avoids the situation in which disconnection occurs when the slats are lifted or lowered or when the angle of the slats is adjusted. Also, since the leads 30 can be hidden within the wiring spaces 36, the appearance of the solar cell window shade 10 can be improved.

Also, the wiring spaces 36 formed in the guide rails 32 can be easily made larger than the through holes 24 formed in each slat 12. By providing the leads 30 in the wiring spaces 36 larger than the through holes 24, thicker leads 30 can be employed compared to the case of inserting the leads 30 through the through holes 24, so that extraction of electricity can be improved. Further, employing thicker leads 30 can restrain heat generation in the leads 30, thereby improving the safety.

If the leads 30 are made to pass through the through holes 24 along with the lifting and lowering cords 22, smooth lifting and lowering of the slats 12 may be inhibited. However, when the leads 30 are provided in the wiring spaces 36 within the guide rails 32 as described in the present embodiment, such a situation can be avoided.

Thus, in the solar cell window shade 10 of the present embodiment, wiring can be suitably provided for the solar cells 14 arranged on each slat 12.

In the abovementioned embodiment, multiple solar cells 14 arranged on a single slat 12 are connected in series to each other, and electricity generated by the solar cells 14 connected in series is extracted via a pair of positive and negative terminals. A module in which multiple solar cells are thus electrically connected in series to each other so that a required predetermined voltage can be obtained is referred to as a solar cell cluster.

The solar cells 14 on multiple slats connected in series to each other can configure a solar cell cluster from which a higher voltage can be obtained. For example, when a solar cell cluster is configured by connecting the first negative terminal 40Ra and the second positive terminal 40Lb, the solar cells 14 arranged on the first slat 12a and the solar cells 14 arranged on the second slat 12b are connected in series to each other, so that twice the voltage obtained in the case of one slat can be extracted from between the first positive terminal 40La and the second negative terminal 40Rb.

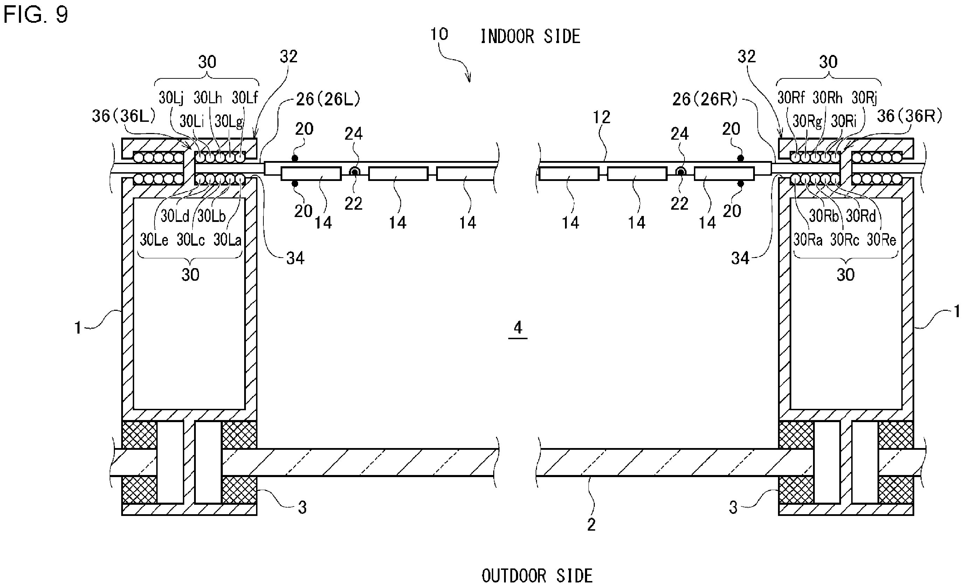

FIG. 9 is a schematic sectional view of essential parts used to describe a modification of the solar cell window shade in the embodiment of the present invention. FIG. 9 is a partially enlarged view of the right wiring space 36R into which the right pin-shaped electrode 26R of a slat 12 is inserted. In a solar cell window shade 90 of the present modification, instead of the leads, multiple (ten in this example) printed wirings 42 (a first right printed wiring 42Ra through a tenth right printed wiring 42Rj) are fixedly arranged within the right wiring space 36R. As shown in FIG. 9, the ten printed wirings 42 are arranged such that a right pin-shaped electrode 26R is located between half of the printed wirings 42 and the other half thereof. In the state where the right pin-shaped electrode 26R is located in between, each of the printed wirings 42 is in contact with the right pin-shaped electrode 26R. The first right printed wiring 42Ra through the fifth right printed wiring 42Re are printed on the inner wall of the right wiring space 36R on the outdoor side, at positions serially from a position closer to the slats 12. Accordingly, the first right printed wiring 42Ra is printed at a position closest to the slats 12, and the fifth right printed wiring 42Re is printed at a position farthest from the slats 12. Meanwhile, the sixth right printed wiring 42Rf through the tenth right printed wiring 42Rj are printed on the inner wall of the right wiring space 36R on the indoor side, at positions serially from a position closer to the slats 12. Accordingly, the sixth right printed wiring 42Rf is printed at a position closest to the slats 12, and the tenth right printed wiring 42Rj is printed at a position farthest from the slats 12.

A surface of each printed wiring 42 is covered with an insulator. A part of the insulator coating of each printed wiring 42 is peeled off to expose the conductor, forming an electrode. The height position at which the electrode is formed is different for each printed wiring. In the sectional view of FIG. 9, only the insulator coating of the first right printed wiring 42Ra is peeled off to form a first right electrode 44Ra, which is electrically in contact with the right pin-shaped electrode 26R. In each of the other right printed wirings of the second right printed wiring 42Rb through the tenth right printed wiring 42Rj, insulator coating 46 is formed on the surface of the conductor, so that the right printed wiring is not electrically in contact with the right pin-shaped electrode 26R.

With the solar cell window shade 90 of the present modification, since wiring can be provided within the wiring spaces 36 by printing the printed wirings 42 on the inner walls of the wiring spaces 36, there is the advantage of facilitated provision of wiring, compared to the case where the leads 30 are arranged within the wiring spaces 36 as described previously.

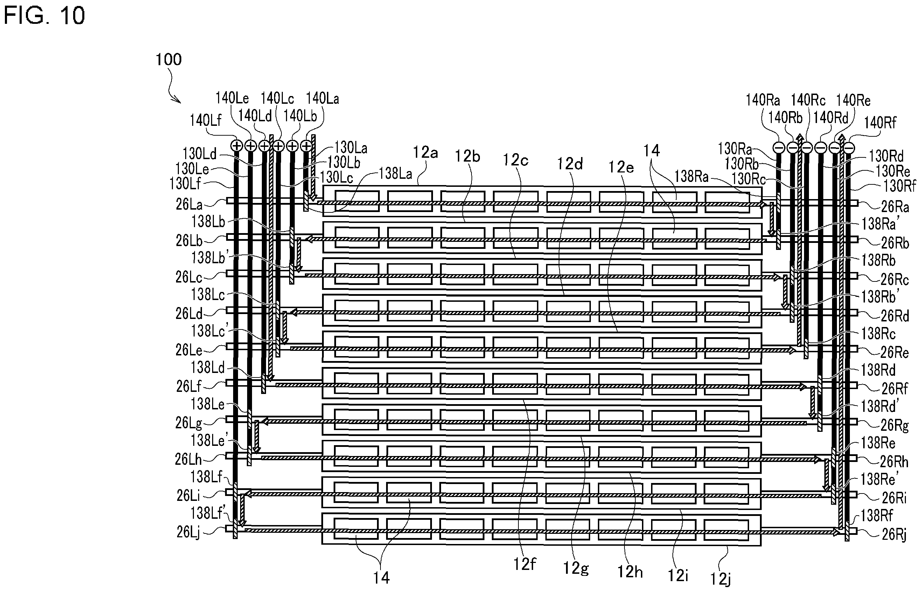

FIG. 10 is a diagram used to describe a solar cell window shade 100 in another embodiment of the present invention. The solar cell window shade 100 of the present embodiment is also provided with ten slats (the first slat 12a through the tenth slat 12j). FIG. 10 shows a state in which all the ten slats are lowered. FIG. 10 is a diagram of the solar cell window shade 100 viewed from the outdoor side.

In the solar cell window shade 100 of the present embodiment, wiring is provided such that the solar cells 14 arranged on five slats are connected in series to each other to form a solar cell cluster. More specifically, the solar cells 14 arranged on the first slat 12a through the fifth slat 12e are connected in series to each other to form a first solar cell cluster, and the solar cells 14 arranged on the sixth slat 12f through the tenth slat 12j are connected in series to each other to form a second solar cell cluster.

In the solar cell window shade 100, a first left lead 130La through a sixth left lead 130Lf are vertically arranged at positions serially from a position closer to the slats, on the outdoor side of the left wiring space 36L formed in a guide rail 32. Also, on the outdoor side of the right wiring space 36R, a first right lead 130Ra through a sixth right lead 130Rf are vertically arranged at positions serially from a position closer to the slats. As shown in FIG. 10, an extending direction of each lead and an extending direction of a pin-shaped electrode of each slat intersect perpendicularly.

In the solar cell window shade 100 of the present embodiment, one or two electrodes are formed in each lead. The height position at which an electrode is formed is different for each lead.

In the first left lead 130La, a first left electrode 138La is formed at a position where the first left lead 130La and the first left pin-shaped electrode 26La intersect. In the second left lead 130Lb, a second left electrode 138Lb and a second left electrode 138Lb' are formed at positions where the second left lead 130Lb and the second left pin-shaped electrode 26Lb intersect and where the second left lead 130Lb and the third left pin-shaped electrode 26Lc intersect. In the third left lead 130Lc, a third left electrode 138Lc and a third left electrode 138Lc' are formed at positions where the third left lead 130Lc and the fourth left pin-shaped electrode 26Ld intersect and where the third left lead 130Lc and the fifth left pin-shaped electrode 26Le intersect. In the fourth left lead 130Ld, a fourth left electrode 138Ld is formed at a position where the fourth left lead 130Ld and the sixth left pin-shaped electrode 26Lf intersect. In the fifth left lead 130Le, a fifth left electrode 138Le and a fifth left electrode 138Le' are formed at positions where the fifth left lead 130Le and the seventh left pin-shaped electrode 26Lg intersect and where the fifth left lead 130Le and the eighth left pin-shaped electrode 26Lh intersect. In the sixth left lead 130Lf, the fifth left electrode 138Le and the fifth left electrode 138Le' are formed at positions where the sixth left lead 130Lf and the seventh left pin-shaped electrode 26Lg intersect and where the sixth left lead 130Lf and the eighth left pin-shaped electrode 26Lh intersect.

In the first right lead 130Ra, a first right electrode 138Ra and a first right electrode 138Ra' are formed at positions where the first right lead 130Ra and the first right pin-shaped electrode 26Ra intersect and where the first right lead 130Ra and the second right pin-shaped electrode 26Rb intersect. In the second right lead 130Rb, a second right electrode 138Rb and a second right electrode 138Rb' are formed at positions where the second right lead 130Rb and the third right pin-shaped electrode 26Rc intersect and where the second right lead 130Rb and the fourth right pin-shaped electrode 26Rd intersect. In the third right lead 130Rc, a third right electrode 138Rc is formed at a position where the third right lead 130Rc and the fifth right pin-shaped electrode 26Re intersect. In the fourth right lead 130Rd, a fourth right electrode 138Rd and a fourth right electrode 138Rd' are formed at positions where the fourth right lead 130Rd and the sixth right pin-shaped electrode 26Rf intersect and where the fourth right lead 130Rd and the seventh right pin-shaped electrode 26Rg intersect. In the fifth right lead 130Re, a fifth right electrode 138Re and a fifth right electrode 138Re' are formed at positions where the fifth right lead 130Re and the eighth right pin-shaped electrode 26Rh intersect and where the fifth right lead 130Re and the ninth right pin-shaped electrode 26Ri intersect. In the sixth right lead 130Rf, a sixth right electrode 138Rf is formed at a position where the sixth right lead 130Rf and the tenth right pin-shaped electrode 26Rj intersect.

The first left lead 130La through the sixth left lead 30Lf are externally connected to a first positive terminal 140La through a sixth positive terminal 140Lf, respectively. Also, the first right lead 130Ra through the sixth right lead 130Rf are externally connected to a first negative terminal 140Ra through a sixth negative terminal 140Rf, respectively.

In FIG. 10, bold arrows are shown to indicate current flows. As shown in FIG. 10, when all the slats are lowered, the first left pin-shaped electrode 26La of the first slat 12a is in contact with the first left electrode 138La of the first left lead 130La, and the first right pin-shaped electrode 26Ra is in contact with the first right electrode 138Ra of the first right lead 130Ra. Also, the second right pin-shaped electrode 26Rb of the second slat 12b is in contact with the first right electrode 138Ra' of the first right lead 130Ra, and the second left pin-shaped electrode 26Lb is in contact with the second left electrode 138Lb of the second left lead 130Lb. The third left pin-shaped electrode 26Lc of the third slat 12c is in contact with the second left electrode 138Lb' of the second left lead 130Lb, and the third right pin-shaped electrode 26Rc is in contact with the second right electrode 138Rb of the second right lead 130Rb. The fourth right pin-shaped electrode 26Rd of the fourth slat 12d is in contact with the second right electrode 138Rb' of the second right lead 130Rb, and the fourth left pin-shaped electrode 26Ld is in contact with the third left electrode 138Lc of the third left lead 130Lc. The fifth left pin-shaped electrode 26Le of the fifth slat 12e is in contact with the third left electrode 138Lc' of the third left lead 130Lc, and the fifth right pin-shaped electrode 26Re is in contact with the third right electrode 138Rc of the third right lead 130Rc. Accordingly, electricity generated by the solar cells 14 arranged on the first slat 12a through the fifth slat 12e (i.e., the first solar cell cluster) is extracted through the first left lead 130La and the third right lead 130Rc via the first positive terminal 140La and the third negative terminal 140Rc.

The same applies to the solar cells 14 arranged on the sixth slat 12f through the tenth slat 12j (i.e., the second solar cell cluster), and electricity generated by the second solar cell cluster is extracted through the fourth left lead 130Ld and the sixth right lead 30Rf via the fourth positive terminal 140Ld and the sixth negative terminal 140Rf.

Thus, with the solar cell window shade 100 of the present embodiment, when all the slats are lowered, electricity generated by the two solar cell clusters can be collected.

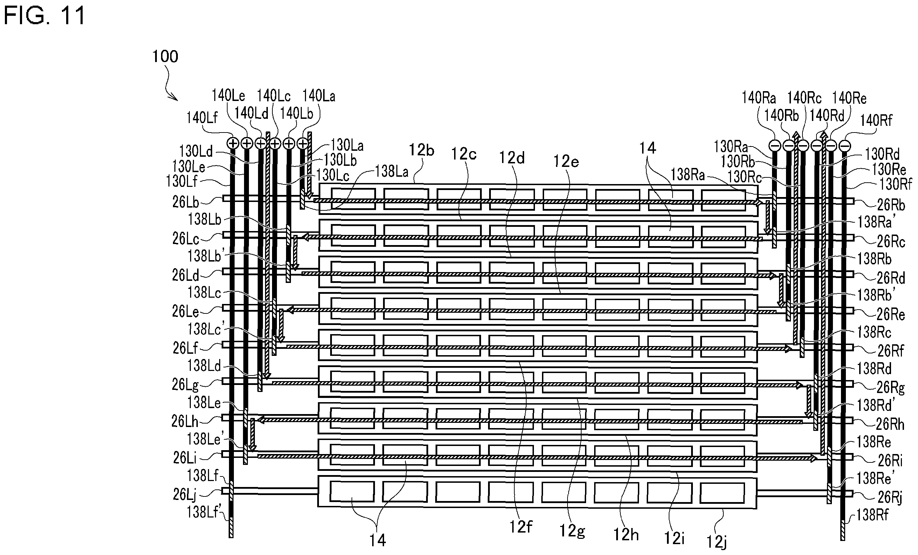

FIG. 11 is a diagram used to describe a state of connection between the pin-shaped electrodes of each slat and leads in the solar cell window shade 100 in the another embodiment of the present invention, when the first slat 12a is stored within the headbox 16 and each slat is moved upward by one slat from the state shown in FIG. 10.

As shown in FIG. 11, when each slat is moved upward by one slat, the second left pin-shaped electrode 26Lb of the second slat 12b is in contact with the first left electrode 138La of the first left lead 130La, and the second right pin-shaped electrode 26Rb is in contact with the first right electrode 138Ra of the first right lead 130Ra. Also, the third right pin-shaped electrode 26Rc of the third slat 12c is in contact with the first right electrode 138Ra' of the first right lead 130Ra, and the third left pin-shaped electrode 26Lc is in contact with the second left electrode 138Lb of the second left lead 130Lb. The fourth left pin-shaped electrode 26Ld of the fourth slat 12d is in contact with the second left electrode 138Lb' of the second left lead 130Lb, and the fourth right pin-shaped electrode 26Rd is in contact with the second right electrode 138Rb of the second right lead 130Rb. The fifth right pin-shaped electrode 26Re of the fifth slat 12e is in contact with the second right electrode 138Rb' of the second right lead 130Rb, and the fifth left pin-shaped electrode 26Le is in contact with the third left electrode 138Lc of the third left lead 130Lc. The sixth left pin-shaped electrode 26Lf of the sixth slat 12f is in contact with the third left electrode 138Lc' of the third left lead 130Lc, and the sixth right pin-shaped electrode 26Rf is in contact with the third right electrode 138Rc of the third right lead 130Rc. Accordingly, when each slat is moved upward by one slat, the solar cells 14 arranged on the second slat 12b through the sixth slat 12f constitute the first solar cell cluster, and electricity generated by the first solar cell cluster is extracted through the first left lead 130La and the third right lead 30Rc via the first positive terminal 140La and the third negative terminal 140Rc.

The second solar cell cluster will now be described. When each slat is moved upward by one slat, the solar cells 14 arranged on the three slats of the seventh slat 12g through the ninth slat 12i constitute the second solar cell cluster. The seventh left pin-shaped electrode 26Lg of the seventh slat 12g is in contact with the fourth left electrode 138Ld of the fourth left lead 130Ld, and the seventh right pin-shaped electrode 26Rg is in contact with the fourth right electrode 138Rd of the fourth right lead 130Rd. Also, the eighth right pin-shaped electrode 26Rh of the eighth slat 12h is in contact with the fourth right electrode 138Rd' of the fourth right lead 130Rd, and the eighth left pin-shaped electrode 26Lh is in contact with the fifth left electrode 138Le of the fifth left lead 130Le. The ninth left pin-shaped electrode 26Li of the ninth slat 12i is in contact with the fifth left electrode 138Le' of the fifth left lead 130Le, and the ninth right pin-shaped electrode 26Ri is in contact with the fifth right electrode 138Re of the fifth right lead 130Re. Accordingly, electricity generated by the second solar cell cluster is extracted through the fourth left lead 130Ld and the fifth right lead 130Re via the fourth positive terminal 140Ld and the fifth negative terminal 140Re.

Thus, with the solar cell window shade 100 of the present embodiment, even when the first slat 12a is stored within the headbox 16 and each slat is moved upward by one slat, electricity generated by the solar cells 14 arranged on the five slats as the first solar cell cluster can be collected, and the output of the solar cells 14 arranged on the three slats as the second solar cell cluster can also be suitably collected. In this case, the voltage of the second solar cell cluster is lower than the voltage of the first solar cell cluster. Accordingly, a booster circuit may be provided to adjust the voltage of the second solar cell cluster to the voltage of the first solar cell cluster. Alternatively, a circuit may be provided to discard the output of the second solar cell cluster when the voltage of the second solar cell cluster is less than a certain voltage.

With reference to FIG. 10, the case where one slat is stored within the headbox 16 has been described. The case where two or more slats are stored within the headbox 16 may also be considered in a similar way. When five or more slats are stored within the headbox 16, there is no slats for constituting the second solar cell cluster, so that electricity is collected only from the first solar cell cluster.

Also in the solar cell window shade 100 of the present embodiment, the multiple leads 130 are fixedly arranged within the wiring spaces 36 provided in the guide rails 32. This prevents the situation in which the leads 130 bulk when the slats 12 are pulled up and stacked.

The features of preventing disconnection, improving the appearance, improving extraction of electricity, restraining heat generation in the leads 130 to improve safety, and smooth lifting and lowering of the slats 12 are the same as those of the solar cell window shade 10 described previously. Thus, in the solar cell window shade 100 of the present embodiment, wiring can be suitably provided for the solar cells 14 arranged on each slat 12.

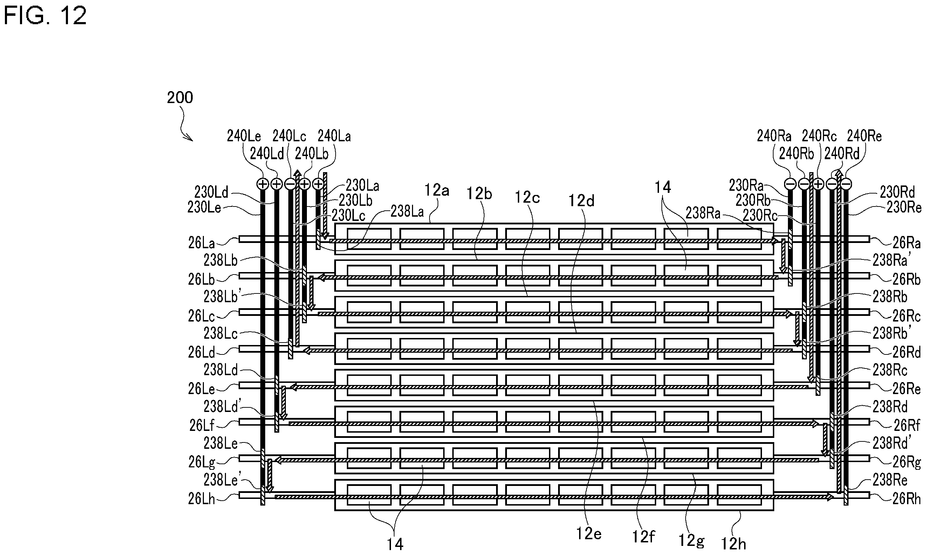

FIG. 12 is a diagram used to describe a solar cell window shade 200 in yet another embodiment of the present invention. The solar cell window shade 200 of the present embodiment is provided with eight slats (the first slat 12a through the eighth slat 12h). FIG. 12 shows a state in which all the eight slats are lowered. FIG. 12 is a diagram of the solar cell window shade 200 viewed from the outdoor side.

In the solar cell window shade 200 of the present embodiment, wiring is provided such that the solar cells 14 arranged on four slats are connected in series to each other to form a solar cell cluster. More specifically, the solar cells 14 arranged on the first slat 12a through the fourth slat 12d are connected in series to each other to form the first solar cell cluster, and the solar cells 14 arranged on the fifth slat 12e through the eighth slat 12h are connected in series to each other to form the second solar cell cluster.

In the solar cell window shade 100, a first left lead 230La through a fifth left lead 230Le are vertically arranged at positions serially from a position closer to the slats, on the outdoor side of the left wiring space 36L formed in a guide rail 32. Also, on the outdoor side of the right wiring space 36R, a first right lead 230Ra through a fifth right lead 230Re are vertically arranged at positions serially from a position closer to the slats. As shown in FIG. 12, an extending direction of each lead and an extending direction of a pin-shaped electrode of each slat intersect perpendicularly.

Also in the solar cell window shade 200 of the present embodiment, one or two electrodes are formed in each lead. The height position at which an electrode is formed is different for each lead.

In the first left lead 230La, a first left electrode 238La is formed at a position where the first left lead 230La and the first left pin-shaped electrode 26La intersect. In the second left lead 230Lb, a second left electrode 238Lb and a second left electrode 238Lb' are formed at positions where the second left lead 230Lb and the second left pin-shaped electrode 26Lb intersect and where the second left lead 230Lb and the third left pin-shaped electrode 26Lc intersect. In the third left lead 130Lc, a third left electrode 338Lc is formed at a position where the third left lead 130Lc and the fourth left pin-shaped electrode 26Ld intersect. In the fourth left lead 230Ld, a fourth left electrode 238Ld and a fourth left electrode 238Ld' are formed at positions where the fourth left lead 230Ld and the fifth left pin-shaped electrode 26Le intersect and where the fourth left lead 230Ld and the sixth left pin-shaped electrode 26Lf intersect. In the fifth left lead 230Le, a fifth left electrode 238Le and a fifth left electrode 238Le' are formed at positions where the fifth left lead 230Le and the seventh left pin-shaped electrode 26Lg intersect and where the fifth left lead 230Le and the eighth left pin-shaped electrode 26Lh intersect.

In the first right lead 230Ra, a first right electrode 238Ra and a first right electrode 238Ra' are formed at positions where the first right lead 230Ra and the first right pin-shaped electrode 26Ra intersect and where the first right lead 230Ra and the second right pin-shaped electrode 26Rb intersect. In the second right lead 230Rb, a second right electrode 238Rb and a second right electrode 238Rb' are formed at positions where the second right lead 230Rb and the third right pin-shaped electrode 26Rc intersect and where the second right lead 230Rb and the fourth right pin-shaped electrode 26Rd intersect. In the third right lead 230Rc, a third right electrode 238Rc is formed at a position where the third right lead 230Rc and the fifth right pin-shaped electrode 26Re intersect. In the fourth right lead 230Rd, a fourth right electrode 238Rd and a fourth right electrode 238Rd' are formed at positions where the fourth right lead 230Rd and the sixth right pin-shaped electrode 26Rf intersect and where the fourth right lead 230Rd and the seventh right pin-shaped electrode 26Rg intersect. In the fifth right lead 230Re, a fifth right electrode 238Re is formed at a position where the fifth right lead 230Re and the eighth right pin-shaped electrode 26Rh intersect.

In the solar cell window shade 200 of the present embodiment, among the five left leads, the first left lead 230La, the second left lead 230Lb, the fourth left lead 230Ld, and the fifth left lead 230Le are externally connected to a first positive terminal 240La, a second positive terminal 240Lb, a fourth positive terminal 240Ld, and a fifth positive terminal 240Le, respectively. Meanwhile, the remaining third left lead 230Lc is externally connected to a third negative terminal 240Lc.

Also, among the five right leads, the first right lead 230Ra, the second right lead 230Rb, the fourth right lead 230Rd, and the fifth right lead 230Re are externally connected to a first negative terminal 240Ra, a second negative terminal 240Rb, a fourth negative terminal 240Rd, and a fifth negative terminal 240Re, respectively. Meanwhile, the remaining third right lead 230Rc is externally connected to a third positive terminal 240Rc.

In FIG. 12, bold arrows are shown to indicate current flows. As shown in FIG. 12, when all the slats are lowered, the first left pin-shaped electrode 26La of the first slat 12a is in contact with the first left electrode 238La of the first left lead 230La, and the first right pin-shaped electrode 26Ra is in contact with the first right electrode 238Ra of the first right lead 230Ra. Also, the second right pin-shaped electrode 26Rb of the second slat 12b is in contact with the first right electrode 238Ra' of the first right lead 230Ra, and the second left pin-shaped electrode 26Lb is in contact with the second left electrode 238Lb of the second left lead 230Lb. The third left pin-shaped electrode 26Lc of the third slat 12c is in contact with the second left electrode 238Lb' of the second left lead 230Lb, and the third right pin-shaped electrode 26Rc is in contact with the second right electrode 238Rb of the second right lead 230Rb. The fourth right pin-shaped electrode 26Rd of the fourth slat 12d is in contact with the second right electrode 238Rb' of the second right lead 230Rb, and the fourth left pin-shaped electrode 26Ld is in contact with the third left electrode 238Lc of the third left lead 230Lc. Accordingly, electricity generated by the solar cells 14 arranged on the first slat 12a through the fourth slat 12d (i.e., the first solar cell cluster) is extracted through the first left lead 230La and the third left lead 230Lc via the first positive terminal 240La and the third negative terminal 240Lc.

The same applies to the solar cells 14 arranged on the fifth slat 12e through the eighth slat 12h (i.e., the second solar cell cluster), and electricity generated by the second solar cell cluster is extracted through the third right lead 230Rc and the fifth right lead 30Re via the third positive terminal 240Rc and the fifth negative terminal 240Re.

Thus, also with the solar cell window shade 200 of the present embodiment, when all the slats are lowered, electricity generated by the two solar cell clusters can be collected.

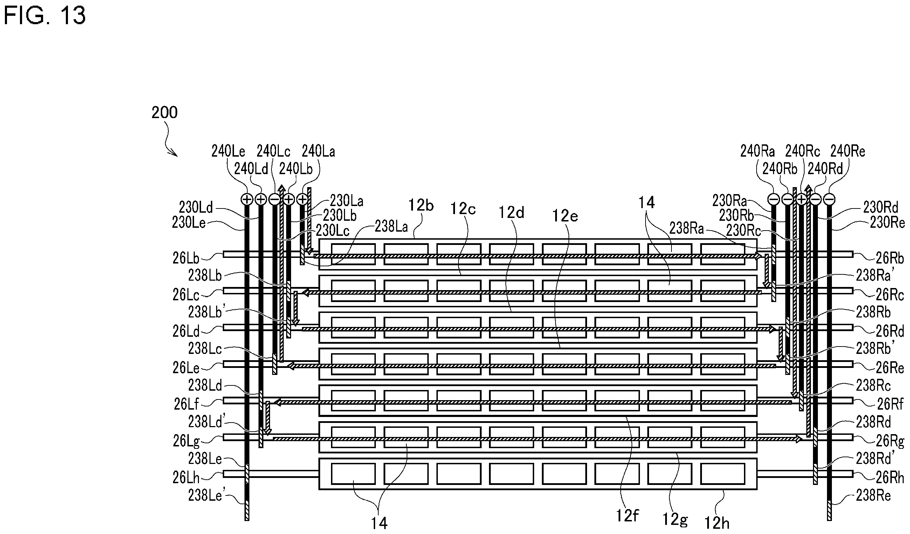

FIG. 13 is a diagram used to describe a state of connection between the pin-shaped electrodes of each slat and leads in the solar cell window shade 200 in the yet another embodiment of the present invention, when the first slat 12a is stored within the headbox 16 and each slat is moved upward by one slat from the state shown in FIG. 12.

As shown in FIG. 13, when each slat is moved upward by one slat, the second left pin-shaped electrode 26Lb of the second slat 12b is in contact with the first left electrode 238La of the first left lead 230La, and the second right pin-shaped electrode 26Rb is in contact with the first right electrode 238Ra of the first right lead 230Ra. Also, the third right pin-shaped electrode 26Rc of the third slat 12c is in contact with the first right electrode 238Ra' of the first right lead 230Ra, and the third left pin-shaped electrode 26Lc is in contact with the second left electrode 238Lb of the second left lead 230Lb. The fourth left pin-shaped electrode 26Ld of the fourth slat 12d is in contact with the second left electrode 238Lb' of the second left lead 230Lb, and the fourth right pin-shaped electrode 26Rd is in contact with the second right electrode 238Rb of the second right lead 230Rb. The fifth right pin-shaped electrode 26Re of the fifth slat 12e is in contact with the second right electrode 238Rb' of the second right lead 230Rb, and the fifth left pin-shaped electrode 26Le is in contact with the third left electrode 238Lc of the third left lead 230Lc. Accordingly, when each slat is moved upward by one slat, the solar cells 14 arranged on the second slat 12b through the fifth slat 12e constitute the first solar cell cluster, and electricity generated by the first solar cell cluster is extracted through the first left lead 230La and the third left lead 230Lc via the first positive terminal 240La and the third negative terminal 240Lc.

The second solar cell cluster will now be described. When each slat is moved upward by one slat, the solar cells 14 arranged on the two slats of the sixth slat 12f and the seventh slat 12g constitute the second solar cell cluster. The sixth right pin-shaped electrode 26Rf of the sixth slat 12f is in contact with the third right electrode 238Rc of the third right lead 230Rc, and the sixth left pin-shaped electrode 26Lf is in contact with the fourth left electrode 238Ld of the fourth left lead 230Ld. The seventh left pin-shaped electrode 26Lg of the seventh slat 12g is in contact with the fourth left electrode 238Ld' of the fourth left lead 230Ld, and the seventh right pin-shaped electrode 26Rg is in contact with the fourth right electrode 238Rd of the fourth right lead 230Rd. Accordingly, electricity generated by the second solar cell cluster is extracted through the third right lead 230Rc and the fourth right lead 230Rd via the third positive terminal 240Rc and the fourth negative terminal 240Rd.

Thus, with the solar cell window shade 200 of the present embodiment, even when the first slat 12a is stored within the headbox 16 and each slat is moved upward by one slat, electricity generated by the solar cells 14 arranged on the four slats as the first solar cell cluster can be collected, and the output of the solar cells 14 arranged on the two slats as the second solar cell cluster can also be suitably collected. In this case, the voltage of the second solar cell cluster is lower than the voltage of the first solar cell cluster. Accordingly, a booster circuit may be provided to adjust the voltage of the second solar cell cluster to the voltage of the first solar cell cluster. Alternatively, a circuit may be provided to discard the output of the second solar cell cluster when the voltage of the second solar cell cluster is less than a certain voltage.

With reference to FIG. 13, the case where one slat is stored within the headbox 16 has been described. The case where two or more slats are stored within the headbox 16 may also be considered in a similar way. When four or more slats are stored within the headbox 16, there is no slats for constituting the second solar cell cluster, so that electricity is collected only from the first solar cell cluster.

Also in the solar cell window shade 200 of the present embodiment, the multiple leads 230 are fixedly arranged within the wiring spaces 36 provided in the guide rails 32. This prevents the situation in which the leads 230 bulk when the slats 12 are pulled up and stacked.

The features of preventing disconnection, improving the appearance, improving extraction of electricity, restraining heat generation in the leads 230 to improve safety, and smooth lifting and lowering of the slats 12 are the same as those of the solar cell window shades 10 and 100 described previously. Thus, in the solar cell window shade 200 of the present embodiment, wiring can be suitably provided for the solar cells 14 arranged on each slat 12.

In the solar cell window shade 100 described with reference to FIGS. 10 and 11, one solar cell cluster is constituted by the solar cells 14 arranged on five slats 12. When a solar cell cluster is constituted by an odd number of slats 12 in this way, the positive electrode is located opposite, in a lateral direction of the slats 12, to the negative electrode in the solar cell cluster. Meanwhile, in the solar cell window shade 100 described with reference to FIGS. 12 and 13, one solar cell cluster is constituted by the solar cells 14 arranged on four slats 12. When a solar cell cluster is constituted by an even number of slats 12 in this way, the positive electrode and the negative electrode are located on the same side in a lateral direction of the slats 12 in the solar cell cluster. Thus, arrangement of the positive electrode and the negative electrode varies according to whether an even number or an odd number of slats are used. Also, with regard to a difference in method for extraction via the positive electrode and the negative electrode in the wiring, in FIG. 4, for example, the first left lead 30La through the fifth left lead 30Le may be set to the positive electrode, and the sixth left lead 30Lf through the tenth left lead 30Lj may be set to the negative electrode. The first right lead 30Ra through the fifth right lead 30Re and the sixth right lead 30Rf through the tenth right lead 30Rj may also be set in a similar way. Using all the leads, every combination is available, and the configuration is not limited to that of each embodiment disclosed in the present specification.

The present invention has been described with reference to embodiments. The embodiments are intended to be illustrative only, and it will be obvious to those skilled in the art that various modifications and changes could be developed within the scope of claims of the present invention and that such modifications and changes also fall within the scope of claims of the present invention. Therefore, the description in the present specification and the drawings should be regarded as exemplary rather than limitative.

In the embodiments described above, a solar cell window shade is mounted on an opening in a building in which curtain wall construction is employed. However, a solar cell window shade of the present invention can also be mounted on an opening in a building in which other construction is employed. Also, the portion where a guide rail is provided is not limited to a mullion, as long as it is a jamb on an opening.

According to the description above, the following inventions can be found.

A solar cell window shade of one aspect of the present invention is disposed in an opening in a building, and the solar cell window shade includes: multiple slats arranged longitudinally; a solar cell provided on each slat; a pin-shaped electrode that protrudes from each of the both ends in a length direction of each slat toward a lateral direction and that is electrically conductive with the solar cell; a guide rail that is provided in a jamb on the opening and that slidably holds the pin-shaped electrode; a wire that is fixedly disposed within a wiring space formed in the guide rail and that electrically connects with the solar cell of a slat; and an electrode formed on the wire such as to be electrically in contact with the pin-shaped electrode.

According to this aspect, a wire for electrically connecting with the solar cell of a slat is fixedly disposed within the wiring space formed in the guide rail. Accordingly, even when the slats are lifted or lowered, the wires are not moved. This prevents the situation in which leads bulk when the slats are pulled up and stacked. Also, since wires are disposed in the wiring space within a guide rail separated from the slats, disconnection of the slats can be prevented, and the appearance of the solar cell window shade can be improved. Thus, in the solar cell window shade of the present aspect, wiring can be suitably provided for a solar cell arranged on each slat.

The wire may be constituted by a lead covered with an insulator, and the electrode may be a portion of the lead where the covering is peeled off and a conductor is exposed.

The wire may be constituted by a printed wiring of which a surface is covered with an insulator, and the electrode may be a portion of the printed wiring where the covering is peeled off and a conductor is exposed.

The slats may include a first slat, and a second slat positioned below the first slat. The pin-shaped electrode may include a first pin-shaped electrode provided in the first slat, and a second pin-shaped electrode provided in the second slat. The wire may include a first wire and a second wire. The electrode may include a first electrode formed on the first wire, and a second electrode formed on the second wire. When the first slat is located at a predetermined first position and the second slat is located at a predetermined second position, the first pin-shaped electrode may be electrically in contact with the first electrode, and the second pin-shaped electrode may be electrically in contact with the second electrode. When the second slat is moved from the second position to the first position, the second pin-shaped electrode may be electrically in contact with the first electrode of the first wire. The first position and the second position may be the position of the first slat and the position of the second slat when all the slats are lowered, for example. In this case, even when the slats are moved, electricity generated by a solar cell disposed on the second slat can be extracted.

### [REFERENCE SIGNS LIST]

- 1: mullion
- 2: glass panel
- 3: structural sealant
- 10, 90, 100, 200: solar cell window shades
- 12: slat
- 14: solar cell
- 16: headbox
- 20: ladder cord
- 22: lifting and lowering cord
- 24: through hole
- 26: pin-shaped electrode
- 30: lead
- 32: guide rail
- 34: vertically-long opening
- 36: wiring space
- 42: printed wiring

### [INDUSTRIAL APPLICABILITY]

The present invention is applicable to a solar cell window shade provided with solar cells.

## Claims

1. A solar cell window shade disposed in an opening in a building, the solar cell window shade comprising:
a plurality of slats vertically aligned ;
a solar cell provided on each slat;
a pin-shaped electrode that protrudes from each of the both ends in a length direction of each slat toward a lateral direction and that is electrically conductive with the solar cell;
a guide rail that is provided in a jamb on the opening and that slidably holds the pin-shaped electrode;
a wire that is fixedly disposed within a wiring space formed in the guide rail and that electrically connects with the solar cell of a slat; and
an electrode formed on the wire to be electrically in contact with the pin-shaped electrode.

2. The solar cell window shade according to claim 1, wherein
the wire comprises a lead wire provided with an insulator coating, and
the electrode is a portion of the lead wire where the insulator coating is peeled off the wire and the lead wire is exposed as a conductor.

3. The solar cell window shade according to claim 1, wherein
the wire comprises a printed wiring provided with an insulator coating on its surface, and
the electrode is a portion of the printed wiring where the insulator coating is peeled off the wire and the printed wiring is exposed as a conductor.

4. The solar cell window shade according to any one of claims 1 to 3, wherein
the slat includes a first slat, and a second slat positioned below the first slat,
the pin-shaped electrode includes a first pin-shaped electrode provided in the first slat, and a second pin-shaped electrode provided in the second slat,
the wire includes a first wire and a second wire,
the electrode includes a first electrode formed on the first wire, and a second electrode formed on the second wire, wherein
when the first slat is located at a predetermined first position and the second slat is located at a predetermined second position, the first pin-shaped electrode is electrically in contact with the first electrode, and the second pin-shaped electrode is electrically in contact with the second electrode, and,
when the second slat is moved from the second position to the first position, the second pin-shaped electrode is electrically in contact with the first electrode of the first wire.
